# FASCICULE DE BREVET EUROPEEN

(11) **EP 1 048 890 B1**
(45) Date de publication et mention de la délivrance du brevet: **08.12.2004**
(21) Numéro de dépôt: 00401024.5
(22) Date de dépôt: 13.04.2000
(51) Int. Cl.: F16M 11/06, F21V 21/26, A61G 12/00

(54) **Butée soupe de limitation de course angulaire, système articulé comprenant une telle butée, et equipement médical comportant un tel système articulé**
Flexibler Drehwinkelbegrenzungsanschlag, Gelenksystem mit solch einem Anschlag und medizinische Ausrüstung mit solch einem Gelenksystem
Flexible angular limitation abutment, articulated system with such an abutment, and medical equipment with such an articulated system

(30) Priorité: 28.04.1999 FR 9905359
(43) Date de publication de la demande: 02.11.2000
(73) Titulaire: ALM, 45160 Ardon (FR)
(72) Inventeur: Verdier, Alain, 42170 St Just-St Rambert (FR)
(74) Mandataire: Jacobson, Claude

(56) Documents cités:
- EP-A- 0 614 037
- EP-A- 0 742 377
- US-A- 3 942 751
- US-A- 4 427 382

## Description

La présente invention concerne les butées de limitation de courses angulaires autour d'un axe d'un premier élément vis à vis d'un second élément, comme connu de EP-A-614 037.

De nombreux systèmes articulés utilisent de tels éléments déplaçables en rotation l'un par rapport à l'autre.

Pour des questions d'occupation de l'espace environnant ou de transmission de puissance, de données ou de fluides, la course angulaire entre ces éléments doit être limitée, dans les deux sens de rotation, par des butées.

Classiquement, ces butées sont rigides, ce qui se traduit, selon les masses et les vitesses de déplacement des éléments, par des arrêts sur butées brutaux, générateurs de vibrations et très souvent bruyants.

De plus, les chocs répétés et les inerties mises en oeuvre peuvent mettre en cause rapidement la sécurité du système.

La présente invention a pour objet de proposer une butée souple assurant la limitation sans heurts de course angulaire entre deux éléments et un freinage progressif du mouvement de rotation relatif entre ces deux éléments, en supprimant les inconvénients susmentionnés des butées fixes.

Pour ce faire, selon un aspect de l'invention, le premier élément comporte une partie intérieure s'étendant coaxialement par rapport à l'axe de rotation dans une partie de manchon du deuxième élément, la butée comprenant, en outre, un élément élastique à double enroulement hélicoïdal de même sens de part et d'autre d'une zone de liaison centrale, disposé concentriquement entre la partie intérieure et la partie de manchon, chaque enroulement se terminant par une partie d'extrémité, la partie de manchon comprenant une première zone de butée susceptible de venir en appui contre la zone centrale du ressort, la partie intérieure comprenant au moins une deuxième et une troisième zones de butée, chacune susceptible de venir en appui contre une partie d'extrémité correspondante de l'élément élastique.

Selon d'autres caractéristiques plus particulières de l'invention :
- les deuxième et troisième zones de butée sont décalées angulairement ;
- chaque enroulement est disposé normalement lâche autour de la partie intérieure ;
- les parties d'extrémités s'étendent axialement et/ou radialement ;

La présente invention a également pour objet un système articulé comprenant au moins une telle butée souple et typiquement au moins un conducteur ou tuyau souple s'étendant dans les premier et deuxième éléments.

La présente invention a pour autre objet un équipement médical comprenant au moins un tel système articulé.

D'autres caractéristiques et avantages de la présente invention ressortiront de la description suivante de modes de réalisation particuliers, donnés à titre illustratif mais nullement limitatif, faite en relation avec les dessins annexés, sur lesquels :
- la figure 1 est une vue en coupe longitudinale d'un agencement d'articulation à butée souple selon l'invention ;
- les figures 2 et 3 sont des vues respectivement du dessus et de face du ressort de l'agencement de la figure 1 ;
- la figure 4 est une vue schématique d'un ensemble plafonnier d'éclairage incorporant une butée souple selon l'invention ; et
- la figure 5 est une vue schématique en perspective, en coupe partielle, d'un autre mode de réalisation d'ensemble articulé à butée souple selon l'invention.

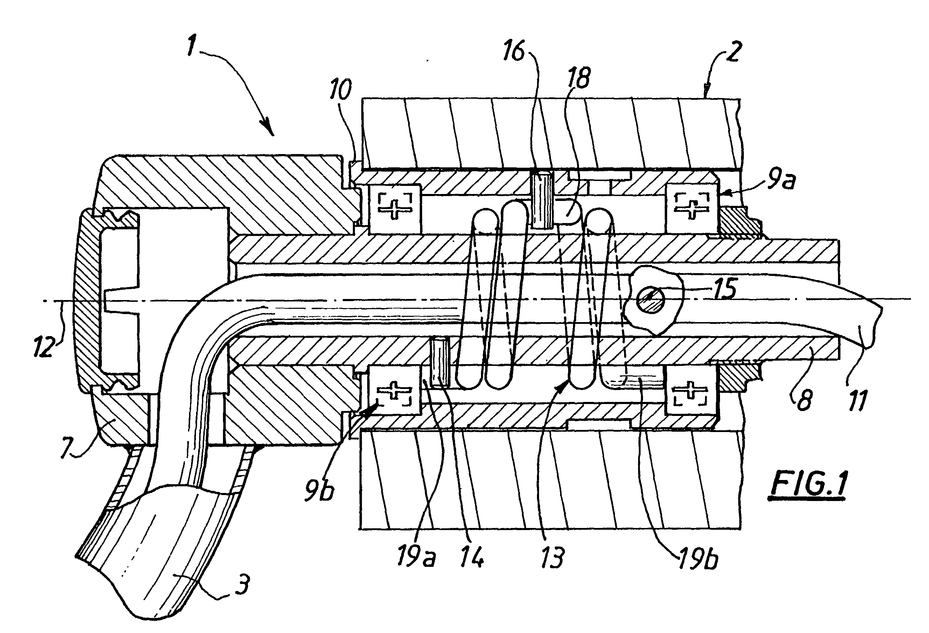

Sur la figure 1, on a représenté un exemple de sous-ensemble 1 d'articulation, incorporant une butée souple selon l'invention, entre un premier élément 2 et un deuxième élément 3.

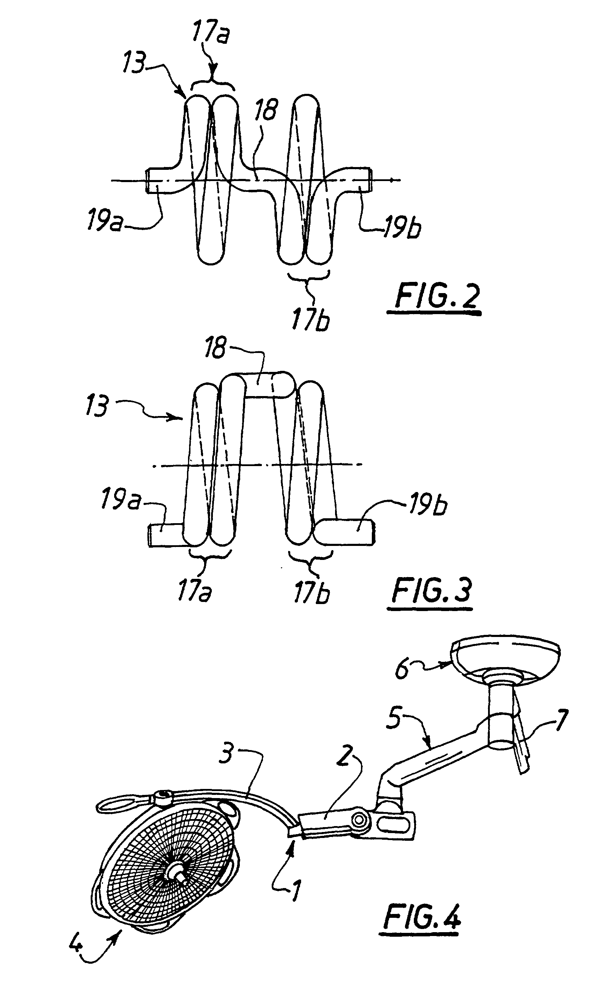

Dans l'exemple d'application représenté sur la figure 4, le sous-ensemble d'articulation à butée souple 1 est disposé entre l'embase d'un bras 3 support d'éclairage opératoire 4 mobile en rotation par rapport à une platine 2, elle-même montée de façon articulée à l'extrémité d'un bras 5 dépendant d'une embase de plafonnier 6 supportant avantageusement au moins un second bras 7.

En revenant à la figure 1, l'embase du bras 3 est fixée à une tête 7 solidaire d'un élément tubulaire 8 tourillonnant, à l'aide de roulements 9a, 9b, dans un manchon 10 solidaire de l'élément 2.

Selon un aspect de l'invention, dans le bras 3, l'élément tubulaire 8, et au-delà de ce dernier, dans l'élément 2, court au moins un câble 11 de passage de courant électrique et/ou de transmission de données numériques, électriques ou optiques, et/ou au moins une canalisation de transfert de fluide médical (oxygène, vide, ...).

L'élément tubulaire 8 et le manchon 10 sont coaxiaux d'axe 12. La rotation du bras 3, autour de l'axe 12 vis à vis de l'élément 2 est limitée de façon contrôlée par un élément élastique à enroulements 13 coopérant sélectivement, comme on le verra plus loin, avec des butées 14 et 15, portées par l'élément tubulaire 3, et 16, portée par le manchon stationnaire 10.

Comme on le voit mieux sur les figures 2 et 3, l'élément élastique 13 typiquement réalisé en fil d'acier à ressort comprend deux zones d'enroulements 17a, 17b de mêmes sens reliées par une branche intermédiaire de liaison 13 s'étendant dans un plan tangent au cylindre formé par les zones d'enroulement 17a, 17b

Dans le mode de réalisation représenté sur les figures 1 à 4, chaque zone d'enroulement forme une spire complète prolongée d'une demi-spire et se termine en une extrémité axiale 19a, 19b, les extrémités axiales 19a, 19b étant sensiblement alignées l'une avec l'autre et diamétralement opposées à la branche de liaison 18.

En se référant de nouveau à la figure 1, l'élément élastique 13 est enfilé lâche sur l'élément tubulaire 8 entre ce dernier et le manchon 10, en étant rendu prisonnier par une goupille formant butée 16 montée dans le manchon 10 et s'étendant radialement vers l'intérieur entre les deux enroulements 17a, 17b de façon à coopérer sélectivement en butée latéralement avec la branche intermédiaire 18 de l'élément élastique 13.

De façon similaire, deux butées 14 et 15 sont montées dans l'élément tubulaire 8 en s'étendant radialement vers l'extérieur de ce dernier pour venir sélectivement coopérer en butée latéralement avec les extrémités axiales 19a et 19b de l'organe élastique.

De cette façon, lorsque le bras 3 tourne autour de l'axe 12, par rapport à l'élément 2, il entraîne en rotation l'extrémité d'une des zones d'enroulement de l'élément élastique 13, par le biais de la goupille 14 si la rotation est dans le sens horaire ou par le biais de la goupille 15 si la rotation est dans le sens anti-horaire.

Lorsque la rotation devient importante, la branche centrale 18 de l'élément élastique 13 vient buter sur la goupille stationnaire 16. A partir de ce moment, la rotation de l'élément tubulaire 8 va commencer à contraindre l'élément élastique, ce qui va créer un couple antagoniste freinant progressivement le mouvement du bras jusqu'à son total arrêt.

La restitution de l'énergie emmagasinée dans l'élément élastique 13 ramène ensuite le bras 3 en arrière. L'amortissement de la butée souple peut être ajusté en réglant la raideur de l'organe élastique 13.

Comme on le comprendra de ce qui précède, selon le sens de rotation du bras 3 et de l'élément tubulaire 8, seule une zone d'enroulement 17a ou 17b, de l'élément élastique 13 est sollicité, l'autre zone d'enroulement restant libre.

L'enroulement sollicité est contraint dans le sens de l'enroulement et, donc, dans le sens d'un resserrement des spires autour de l'élément tubulaire 8. L'amortissement total est donc atteint lorsque toutes les spires de cet enroulement se sont resserrées sur l'élément tubulaire 8, éliminant ainsi tout risque de dépassement des contraintes admissibles de l'élément élastique 13.

Selon un aspect de l'invention, comme représenté sur la figure 1, les goupilles 14 et 15 sont angulairement décalées, typiquement d'environ 90 degrés.

Ce décalage permet de fixer la course angulaire totale du bras. L'agencement à goupilles décalées selon l'invention permet d'obtenir des courses angulaires supérieures à 360 degrés, ce qui est généralement impossible avec des systèmes classiques à butées fixes simples.

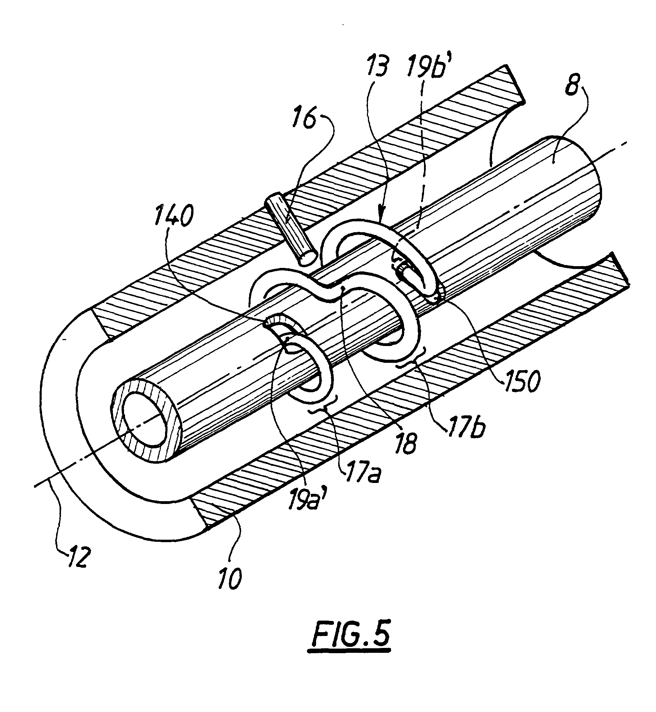

Dans le mode de réalisation simplifié de la figure 5, les zones d'enroulement 17a et 17b de l'élément élastique 13 sont limitées à une spire et les zones de butée solidaires de l'élément tubulaire intérieur 8 sont ici constituées par des faces radiales de lumières angulaires 140,150 formées dans l'élément tubulaire 8 et dans lesquelles pénètrent les extrémités libres, ici repliées radialement vers l'intérieur 19a et 19b de l'élément élastique 13. Le décalage angulaire recherché entre les zones de butée est assuré par un décalage angulaire des lumières 140 et 150 et/ou par l'extension angulaire de ces dernières. La zone de butée avec l'élément tubulaire extérieur 10 est ici constituée, comme précédemment, par une goupille 16 s'étendant radialement vers l'intérieur 16 montée dans un trou radial formé dans l'élément 10.

Quoique l'invention ait été décrite en relation avec un mode de réalisation particulier, elle ne s'en trouve pas limitée mais est au contraire susceptible de modifications et de variantes qui apparaîtront à l'homme de l'art dans le cadre des revendications ci-après.

En particulier, si elle trouve une application préférentielle dans les systèmes suspendus porteurs d'équipements médicaux, tels que les éclairages opératoires susmentionnés, les microscopes opératoires, les bras de distribution et les équipements mobiles de radiographies, elle peut trouver son application dans d'autres domaines industriels pour grand public, comme par exemple les têtes de rotation pour caméras ou les supports de ventilateurs tournants.

## Revendications

1. Butée souple de limitation de course angulaire autour d'un axe (12) d'un premier élément (3,8) vis à vis d'un second élément (2, 10), **caractérisé en ce que** le premier élément comporte une partie intérieure (8) s'étendant coaxialement, par rapport audit axe (12), dans une partie de manchon (10) du deuxième élément, comprenant un élément élastique (13) à double enroulement hélicoïdal de même sens (17a, 17b) de part et d'autre d'une zone de liaison centrale (18), disposé concentriquement entre la partie intérieure(8) et la partie de manchon (10), chaque enroulement (17a, 17b) se termine par une partie d'extrémité (19a, 19b - 19a',19b'), la partie de manchon (10) comprenant une première zone de butée (16) susceptible de venir porter en appui contre la zone centrale (18) de l'élément élastique (13), la partie intérieure comprenant au moins une deuxième (14, 140) et une troisième (15,150) zones de butée, chacune susceptible de venir portée en appui contre une partie d'extrémité correspondante (19a, 19b) de l'élément élastique.

2. Butée souple selon la revendication 1, **caractérisée en ce que** chaque enroulement (17a, 17b) est disposé normalement lâche autour de la partie intérieure (8).

3. Butée souple selon la revendication 1 ou la revendication 2, **caractérisée en ce que** les deuxième et troisième zones de butée (14, 15 ; 140,150) sont décalées angulairement.

4. Butée souple selon l'une des revendications précédentes, **caractérisée en ce que** les parties d'extrémités (19a, 19b) s'étendent sensiblement axialement.

5. Butée souple selon l'une des revendications 1 à 3, **caractérisée en ce que** les parties d'extrémités s'étendent sensiblement radialement.

6. Butée souple selon l'une des revendications précédentes, **caractérisée en ce qu'**au moins une zone de butée (14, 15, 16) est constituée par une goupille radiale.

7. Butée souple selon la revendication 5, **caractérisée en ce qu'**au moins une zone de butée (140, 150) est constituée par une découpe dans la partie intérieure (8).

8. Butée souple selon l'une des revendications précédentes, **caractérisée en ce que** la partie intérieure (8) est tubulaire.

9. Système articulé comprenant au moins une butée souple selon l'une des revendications précédentes,

10. Système articulé selon la revendication 9, comprenant au moins un conducteur ou tuyau souple (11) s'étendant dans les premier (3) et deuxième (2) éléments.

11. Equipement médical comprenant au moins un système articulé selon l'une des revendications 9 ou 10.

## Claims

1. Flexible abutment for limiting angular travel about an axis (12) of a first element (3, 8) relative to a second element (2, 10), **characterised in that** the first element comprises an inner part (8) extending coaxially, with respect to said axis (12), in a sleeve portion (10) of the second element, comprising a resilient element (13) with a double helical coil in the same direction (17a, 17b) on either side of a central connecting zone (18), arranged concentrically between the inner part (8) and the sleeve portion (10), each coil (17a, 17b) terminates in an end portion (19a, 19b - 19a', 19b'), the sleeve portion (10) comprising a first abutment zone (16) capable of bearing against the central zone (18) of the resilient element (13), the inner part comprising at least a second (14, 140) and a third (15, 150) abutment zone, each capable of bearing against a corresponding end portion (19a, 19b) of the resilient element.

2. Flexible abutment according to claim 1, **characterised in that** each coil (17a, 17b) is normally loosely arranged around the inner part (8).

3. Flexible abutment according to claim 1 or 2, **characterised in that** the second and third abutment zones (14, 15; 140, 150) are angularly offset.

4. Flexible abutment according to one of the preceding claims, **characterised in that** the end portions (19a, 19b) extend substantially axially.

5. Flexible abutment according to one of claims 1 to 3, **characterised in that** the end portions extend substantially radially.

6. Flexible abutment according to one of the preceding claims, **characterised in that** at least one abutment zone (14, 15, 16) is formed by a radial pin.

7. Flexible abutment according to claim 5, **characterised in that** at least one abutment zone (140, 150) is formed by a recess in the inner part (8).

8. Flexible abutment according to one of the preceding claims, **characterised in that** the inner part (8) is tubular.

9. Articulated system comprising at least one flexible abutment according to one of the preceding claims.

10. Articulated system according to claim 9, comprising at least one flexible conductor or hose (11) extending within the first (3) and second (2) elements.

11. Medical equipment comprising at least one articulated system according to one of claims 9 or 10.

## Patentansprüche

1. Flexibler Anschlag zum Begrenzen der Winkelverstellung von einem ersten Element (3,8) gegenüber einem zweiten Element (2, 10) um eine Achse (12) herum, **dadurch gekennzeichnet, dass** das erste Element einen Innenabschnitt (8) aufweist, welcher sich bezüglich der Achse (12) in einen Muffen-Abschnitt (10) des zweiten Elements koaxial erstreckt, aufweisend ein elastisches Element (13) aus gleichlaufenden, schraubenlinienförmigen Doppelwicklungen (17a, 17b) auf beiden Seiten einer zentralen Verbindungszone (18), welche zwischen dem Innenabschnitt (8) und dem Muffen-Abschnitt (10) konzentrisch angeordnet ist, wobei jede Wicklung (17a, 17b) in einem Endabschnitt (19a, 19b - 19a', 19b') endet, wobei der Muffen-Abschnitt (10) einen ersten Anschlagbereich aufweist, welcher geeignet ist, in Kontaktanschlag gegen den zentralen Bereich (18) des elastischen Elements (13) zu kommen, wobei der Innenabschnitt mindestens einen zweiten (14,140) und einen dritten (15,150) Anschlagbereich aufweist, wobei jeder zum Kontaktanschlagen gegen einen korrespondierenden Endabschnitt (19a, 19b) des elastischen Elements geeignet ist.

2. Flexibler Anschlag gemäß Anspruch 1, **dadurch gekennzeichnet, dass** jede Wicklung (17a, 17b) um den Innenabschnitt (8) locker angeordnet ist.

3. Flexibler Anschlag gemäß Anspruch 1 oder 2, **dadurch gekennzeichnet, dass** der zweite und der dritte Anschlagbereich (14, 15; 140, 150) winkelgeneigt sind.

4. Flexibler Anschlag gemäß einem der vorhergehenden Ansprüche, **dadurch gekennzeichnet, dass** die Endabschnitte (19a, 19b) sich im Wesentlichen axial erstrecken.

5. Flexibler Anschlag gemäß einem der Ansprüche 1 bis 3, **dadurch gekennzeichnet, dass** sich die Endabschnitte im Wesentlichen radial erstrecken.

6. Flexibler Anschlag gemäß einem der vorhergehenden Ansprüche, **dadurch gekennzeichnet, dass** mindestens ein Anschlagsbereich (14, 15, 16) von einem radialen Stift gebildet ist.

7. Flexibler Anschlag gemäß Anspruch 5, **dadurch gekennzeichnet, dass** mindestens ein Anschlagbereich (140, 150) von einer Aussparung im Innen-Abschnitt (8) gebildet ist.

8. Flexibler Anschlag gemäß einem der vorhergehenden Ansprüche, **dadurch gekennzeichnet, dass** der Innen-Abschnitt (8) rohrförmig ist.

9. Gelenk-System, welches mindestens einen flexiblen Anschlag gemäß einem der vorhergehenden Ansprüche aufweist.

10. Gelenksystem gemäß Anspruch 9, welches mindestens einen Leiter oder einen flexiblen Schlauch (11) aufweist, welcher sich in dem ersten (3) und dem zweiten (2) Element erstreckt.

11. Medizinische Ausrüstung, welche mindestens ein Gelenksystem gemäß einem der Anspruche 9 oder 10 aufweist.
